# EUROPEAN PATENT APPLICATION

(11) **EP 4 741 196 A1**
(43) Date of publication of application: **13.05.2026**
(21) Application number: 23944978.8
(22) Date of filing: 07.07.2023
(51) Int. Cl.: B60K 1/04, B60L 3/00, B60L 50/64, H01M 50/20

(54) **VEHICLE WITH MEANS FOR ABSORBING ENERGY FROM KNOCKS OR IMPACT**

(71) Applicant: Universidad de Deusto, 48007 Bilbao (Vizcaya) (ES); Arenzana Zorrilla, Carlos, 08017 Barcelona (ES)
(72) Inventor: GARCIA BARRUETABEÑA, Jon, 48009 BILBAO (ES); ARENZANA ZORRILLA, Carlos, 08017 BARCELONA (ES)
(74) Representative: Ezcurra Zufia, Maria Antonia
(86) International application number: PCT/ES2023/070439
(87) International publication number: WO 2025/012489

(57) **Abstract**

Vehicle having a body which in turn has a compartment or space (2) inside which is housed a mass (1) which is connected in oscillating fashion to said compartment or space (2) by way of means of connection (3) that are rigid in the absence of any impact and which, following an impact, are at least partially released. The means of connection (3) following impact may be flexible connections (3a), free connections (3b) or compact mixed connections (3c) or composite mixed connections (3d). It is particularly applicable to electric vehicles in that it protects the batteries against shocks and impacts and the consequent risk of leakage and breakage and thus explosion of the batteries, while allowing deformation of the body in the impact zone to be lesser than in the traditional state-of-the-art design methodology.

## Description

### OBJECT OF THE INVENTION

As established in the title of the invention, the object of the present invention is a vehicle provided with means for absorbing the impact of shock or impacts, for use primarily, but not restrictively in electric vehicles having a compartment or space intended to house batteries.

The present invention is characterised by the special design and configuration of all elements involved in protection against impacts or collisions based on the provision of a mass in a compartment in the vehicle body, where said mass is connected to the compartment or body by way of means of connection which, acting in combination, are rigid in the absence of any impact and whose connection with the body compartmentare at least partially releasedin the event of impact. In the case of electric vehicles, this mass is the battery itself.

The present invention therefore relates to the field of vehicles and more specifically it relates to means developed for absorbing the energy of impacts and shocks with the least deformation of the compartment, resulting in protection of both the body compartment and the battery.

### BACKGROUND TO THE INVENTION

Currently, in order to provide the structural area with the required rigidity and to protect both the battery and the compartment and to ensure that it performs with a suitable degree of deformation and damage, the potential area of impact is designed by choosing appropriate material and structural geometry.

There are currently a number of circumstances in which lithium batteries pose certain risks. The most common risk associated with said batteries is what is known as 'thermal runaway', which can cause the batter of the electric vehicle to explode as a result of shocks and impacts.

Thermal runaway occurs when the battery overheats, causing a chain reaction whereby all the thermal cells in the battery eventually catch fire. The cause of this phenomenon usually lies in the battery itself, and may consist of a manufacturing fault, a damaged component or the presence of dust clogging the battery.

Normally, small shocks are not capable of causing a fire or explosion, but it should be noted that a reaction may occur after up to 3 days. It is therefore important to take precautions and wait for a reasonable period of time if battery overcharging has caused any form of suspicious reaction.

In addition to the problem of thermal runaway, lithium batteries also pose other risks and hazards (albeit of very limited likelihood) in the event of battery overstrain, that need to be taken into account. Most are related to the potential appearance of gases, and the presence of liquids that contribute to battery operation, but may pose a risk in the event of a shock, leakage or fire.

It should be noted that, unlike the battery of a petrol-driven car, lithium batteries do not emit gas during operation. However, in the event of overcharging, discharge or short-circuit of the electrical cells, toxic gases may be emitted.

The use of highly corrosive gases and liquids is common in this type of battery, and suitable precautions must therefore be taken. Indeed, the liquid used in the batteries is presented in the form of a gel to prevent it from spraying onto the rest of the vehicle in the event of an accident. As already mentioned, the expulsion of gases does not usually entail a risk due to the location of the battery.

The object of the present invention is therefore to overcome the latent dangers arising from the shocks to which the batteries may be subjected as a result of a blow or impact, by developing a vehicle with means of absorbing energy in the event of shocks and impacts in such a way that the chassis or body may be lighter, as described below and set forth in its essence in the first claim.

### DESCRIPTION OF THE INVENTION

The object of the present invention is set forth in its essence in the independent claim and the various embodiments are set forth in the dependent claims.

The object of the present invention is a vehicle provided with means of absorbing energy from shocks and impacts in the event of an accident with the least deformation of the compartment, resulting in protection of both the body compartment and the battery.

To achieve said purpose, the energy of the impact has to be transferred to and absorbed by another area or multiple zones of the structure itself. This is achieved by means of an element of a large mass that can move by oscillating or vibrating with respect thereto. It is this mass, which can oscillate or vibrate, that receives part of the energy of the impact. This received energy causes the component to oscillate or vibrate. This energy, which is borne by the large mass, dissipates as it oscillates until coming to a halt.

In the case of an electric vehicle, a great deal of synergy already exists, since a large mass is available in the part of the structure that is the impact zone of the body or platform, namely the battery itself.

The batteries are housed in a compartment or space in the interior of the body or platform of the vehicle or space in such a way that part of the energy of the impact is transferred from the body to the mass of the battery through the means of connection whose rigidity and/or shock-absorption prior to and following the impact differ, causing vibration and/or oscillation of the battery.

The innovative elements used to achieve the intended objectives are the elements for connecting the battery support structure to the chassis/body/compartment or space of the vehicle. These connections can have four different architectures of connection and can perform in different ways during normal vehicle operation and following impact, even releasing the battery and allowing it to oscillate and/or vibrate.

Said means of varying rigidity and/or shock-absorption consist of the use of an assembly of means of connection which may be any of the following: mechanical, electromechanical or magnetic connections such as screws, pins, bolts, welds, friction elements, springs, elastomers, rubber bands with or without shock absorbers, shock-absorbing elements, magnets, electromagnets or any combination thereof.

The means of connection of the mass housed in a compartment of the body or chassis are means of connection which in combination and without any impact provide a rigid connection between the mass and the structure of the compartment and in the event of impact are at least partially released, whereby the means of connection may be any of the following or combinations thereof:
Type a) Connections which following impact are flexible connections of variable rigidity and/or shock-absorption.

These connections always permit relative movement of the mass (battery) relative to the structure, chassis/body/frame of the vehicle

Type b) Connections which following impact release the connection between the mass and the structure of the compartment.

These connections are connections acting in two different ways. During normal operation of the vehicle, they are connections which have sufficient rigidity to prevent relative movement between the mass (battery) and the chassis/body/frame/compartment or space of the vehicle, while upon impact at least some of the links connecting the mass to the structure of the compartmentare released.

Type c) Connections which following impact perform in a mixed fashion, in that one part of the connection is released and another part is flexible; the two parts are arranged in combination, and might be called compact mixed means of connection.

Type d) Connections which following impact perform in a mixed fashion, in that one part of the connection is released and another part is flexible; the two parts are arranged separately, and are called composite mixed means of connection.

Type c) and d) connections are mixed connections of type a) and b) that incorporate the two features together in a single architecture, either in combination (compact type) or separately (composite type).

Unless otherwise indicated, all technical and scientific elements used in this specification have the meaning habitually understood by a person skilled in the art to which this invention pertains. In the practice of the present invention, similar or equivalent procedures and materials to those described in the record can be used.

Throughout the description and the claims, the words "contains" or "comprises" and its variants are not intended to exclude other technical characteristics, additives, components or steps. For experts in the field, other objects, advantages and characteristics of the invention will emerge partly from the description and partly from practice with the invention.

### DESCRIPTION OF FIGURES

To complete the description made herein and in order better to aid understanding of the characteristics of the invention, in accordance with a preferential example of a practical embodiment thereof, this description is accompanied by a set of drawings showing as follows in indicative, but not restrictive terms.
Figure 1 is a schematic representation of the body of a vehicle showing a mass connected to the compartment or space in which it is housed.
Figure 2 shows a first embodiment of the means of connection consisting of a connection of the mass to the walls of the compartment or space in which it is housed that is flexible (Type a) following impact.
Figure 3 shows a second embodiment of the means of connection between the mass and compartment or space in which it is housed (Type b) of variable rigidity and/or shock-absorption consisting of a connection that is free following impact.
Figure 4 shows a third embodiment of the means of connection consisting of a mixed connection with a free part and a flexible part connecting the mass to the inner walls of the compartment or space in which it is housed (Type c compact).
Figure 5 shows a fourth composite embodiment with flexible means of connection between the mass and the inner walls of the compartment or space in which it is housed, of variable rigidity and/or shock-absorption (Type a) that is rigid/free before/following impact (Type b). The combination acts as a rigid/flexible connection before/following impact (composite Type d).

### PREFERRED EMBODIMENT OF THE INVENTION.

As per the figures, one preferred embodiment of the proposed invention is described below.

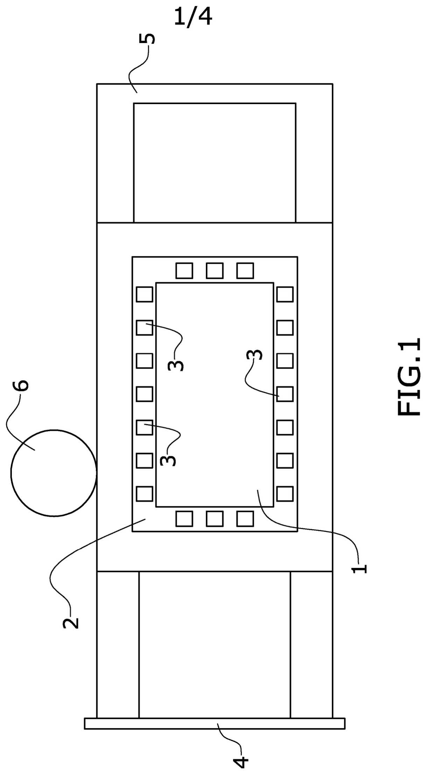

Figure 1 shows the body of a vehicle comprising a compartment or space (2) inside which is housed a mass (1) which is connected in oscillating fashion to said compartment or space (2), by way of means of connection (3), which have the particularity of being rigid in combination in the absence of any impact and which are at least partially released upon an impact and thanks to said variation in rigidity, the mass/battery assembly oscillates, dissipating the energy of the impact.

In a preferred, but in no way restrictive, embodiment, the oscillating mass comprises the batteries of an electric vehicle.

The vehicle to which the impact absorbing means are applied may be a vehicle for the transport of people and/or goods, and the intention is that the body/chassis/frame, in the area where the impact occurs, should suffer much less deformation than would traditionally occur, so that in the particular case of electric cars, the effect is also achieved of preventing the structures of the battery themselves from being the elements that absorb much of the energy of the impact through their deformation and breakage, with a consequent discharge of gases and risk of explosion.

The vehicle body shown in Figure 1 also has a front cross member (4), a rear or closing cross member (5) between which is arranged the compartment or space (2) in which the mass (1) is housed, joined to the compartment or space (2)by way of means of connection of varying rigidity/shock-absorption (3).

The means of connection (3) are arranged between the oscillating mass (1) and the compartment or space (2), suitably positioned in quantity and type between the two, in order to ensure the best absorption regardless of the direction from which the impact comes.

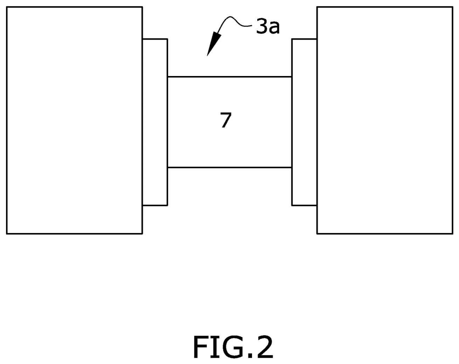

Figure 2 shows a first embodiment of the means of connection (3) between the mass (1) and the compartment or space (2) consisting of the use of means of connection that are flexible following the impact (3a) and whose deformation achieves transmission of the energy of the impact (6) from the compartment or space (2) to the mass (1) which acts as an oscillating mass, minimising deformation of the vehicle body.

As flexible means (3a) springs or elastomers (7) or rubber bands with or without shock absorbers or any combination thereof may be used.

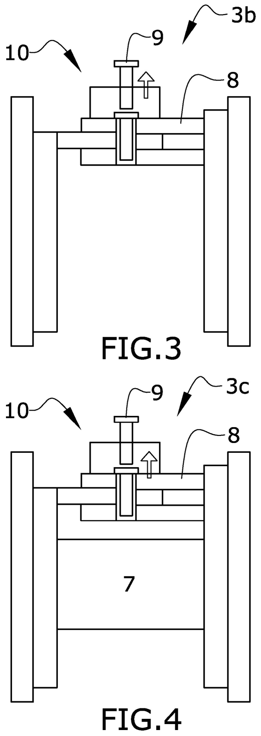

Figure 3 shows a second embodiment of the means of connection (3) between the mass (1) and the compartment or space (2), consisting of means of connection that are free following impact (3b). This type of connection, which is released upon impact, consists of pop-up plates or lugs (8) wherein said plates or lugs (8) have perforations at their ends which are aligned and through which a pin (9) can pass that can be released by means of an electronic release unit (10) positioned above the pin (9). Upon release of the pin, they enable movement of the mass in the plane, that is, they allow relative movement between the mass (1) and the housing or space (2) on a horizontal plane.

Provision of a connection by means of a mechanical fuse would create an area with a change in cross-section, subject to vibration and therefore susceptible to failure due to fatigue, for which reason these elements shall be designed to prevent this type of failure.

Connections that are free following impact (3b) perform in two ways:
- During normal vehicle operation, they are connections with a level of rigidity sufficient to prevent relative movement between the mass and the vehicle chassis/body.
- Upon impact, the behaviour of these connections changes; their rigidity is dramatically reduced and they release the mass in one or more directions.
- These elements all break or are released simultaneously at the moment of impact.
- These connections are formed by mechanical, electromechanical or magnetic types of connection such as screws, pins, bolts, welds, friction elements, springs, elastomers, rubber bands with or without shock absorbers, damping elements, magnets, electromagnets or any combination thereof, which by means of an actuator are removed/moved/released/broken allowing relative movement between the mass and the chassis/frame/body/compartment or space.

Figure 4 shows a third embodiment of the means of connection, consisting of compact mixed means of connection (3c) which consist of means of connection having a flexible part and a free part, i.e. means of connection that are free following impact (3b) and means of connection that are flexible following impact (3a), the two means of connection being arranged in combination.

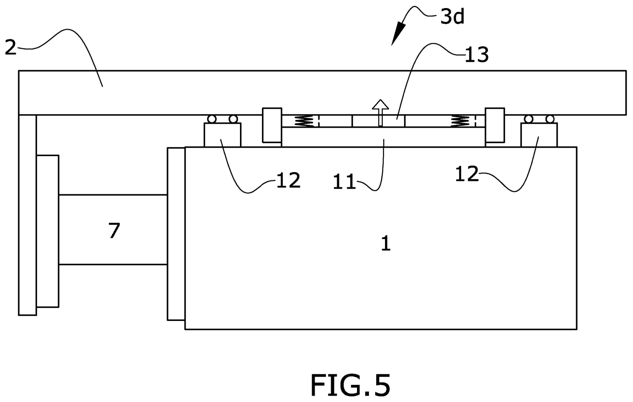

Figure 5 shows a fourth embodiment of the means of connection consisting of composite mixed means of connection (3d), comprising means of connection that are free following impact containing a friction shoe (11) which prevents the mass (1) from being released from the structure or housing (2) before impact. On occurrence of the impact, an electronic unlocking device (13) would release the shoe, causing displacement of the mass (1) in the relative plane, relative to the compartment or space (2) by means of the linear or planar guides (12). It is at this moment that the flexible connection (3a) comes into play.

In any embodiment, any type and quantity of the means of connection or combination thereof may be used.

Having sufficiently described the nature of the present invention, and the means of implementing it, it is noted that within the same essence, it may be made in other embodiments differing in detail from that indicated herein as an example, and to which the protection obtained shall equally extend, provided that it does not alter, change or modify its basic principle.

## Claims

1. Vehicle with means for absorbing the impact of shock or impacts **characterised in that** the vehicle contains a compartment or space (2) housing a mass (1) which is connected to said compartment or space (2) by way of means of connection (3) that in combination act as rigid when there is no impact and which in the event of impact are at least partially released at their connection with the body compartment.

2. Vehicle with means for absorbing the impact of shock or impacts as per Claim 1, **characterised in that** the means of connection (3) consist of the use of means of connection (3a) that are flexible following impact and which, through their deformation, transmit the energy of the impact (6) from the compartment or space (2) to the oscillating mass (1), thus minimising deformation to the body of the vehicle.

3. Vehicle with means for absorbing the impact of shock or impacts as per Claim 1, **characterised in that** the means of connection (3) consist of means of connection (3b) that are free following impact, comprising pop-up plates or lugs (8) wherein said plates or lugs (8) have at their ends a perforation so that they are aligned and through which a bolt (9) can be passed that can be released by means of an electronic release unit (10) fitted on the bolt (9).

4. Vehicle with means of absorbing and/or dissipating the energy of shock or impacts as per Claims 2 and 3, **characterised in that** the means of connection (3) between the mass (1) and the compartment or space (2) consist of the use of compact mixed means of connection (3c) which consist of having means of connection having a flexible part and a free part, i.e. they have means of connection (3b) that are free following impact and means of connection (3a) that are flexible following impact, the two means of connection being arranged in combination.

5. Vehicle with means of absorbing and/or dissipating the energy of shock or impacts as per Claims 2 and 3, **characterised in that** the means of connection (3) between the mass (1) and the compartment or space (2) consist of the use of composite mixed means of connection (3d) comprising means of connection that are free following impact, that have a friction shoe (11) which prevents the mass (1) from being released from the structure or compartment (2) before impact. On occurrence of the impact, an electronic unlocking device (13) would release the shoe, causing displacement of the mass (1) in the relative plane, relative to the compartment or space (2) by means of the linear or planar guides (12).

6. Vehicle with means of absorbing and/or dissipating the energy of shock or impacts as per the preceding claims **characterised in that** the means of connection (3) between the mass (1) and the compartment or space (2) are any of the following means of connection following the impact, or any combination thereof:
- Means of connection that are flexible (3a) following impact;
- Means of connection that are free (3b) following impact;
- Compact means of connection of mixed performance (3c) following impact;
- Composite means of connection of mixed performance (3d) following impact.

7. Vehicle with means of absorbing and/or dissipating the energy of shock or impacts as per any of the preceding claims **characterised in that** the mass (1) is the battery or battery pack/block/structure of an electric or hybrid vehicle.
